Europäisches Patentamt

European Patent Office

Office européen des brevets

(11) Numéro de publication: **0 275 737 B1**

(12) **FASCICULE DE BREVET EUROPEEN**

(45) Date de publication du fascicule du brevet:
13.12.89

(21) Numéro de dépôt: 87402805.3

(22) Date de dépôt: 10.12.87

(51) Int. Cl.⁴: **F23D 14/46, B23K 7/10**
**// B25J19/00, B25J9/04**

(54) **Chalumeau à gaz à corps articulé et extensible.**

(30) Priorité: 23.12.86 FR 8618065

(43) Date de publication de la demande:
27.07.88 Bulletin 88/30

(45) Mention de la délivrance du brevet:
13.12.89 Bulletin 89/50

(84) Etats contractants désignés:
AT BE CH DE ES GB GR IT LI LU NL SE

(56) Documents cités:
EP-A- 0 048 904
AU-B- 40 565
FR-A- 1 511 116
GB-A- 2 143 762
US-A- 4 179 101

PATENT ABSTRACTS OF JAPAN,
vol. 10, no. 73 (M-463)[2130], 22 mars 1986; &
JP-A-60 216 976 (SHIN NIPPON SEITETSU
K.K.) 30-10-1985
PATENT ABSTRACTS OF JAPAN,
vol. 8, no. 230 (M-333)[1667], 23 octobre 1984; &
JP-A-59 110 468 (YASUDA SEISAKUSHO
K.K.) 26-06-1984

(73) Titulaire: Donze, Michel, La Flie, F-54460 Liverdun(FR)

(72) Inventeur: Donze, Michel, La Flie, F-54460 Liverdun(FR)

(74) Mandataire: Chevallier, Robert Marie Georges et al,
Cabinet BOETTCHER 23, rue La Boétie,
F-75008 Paris(FR)

## Description

L'invention a pour objet un chalumeau à gaz à corps articulé et extensible, permettant d'exécuter à distance des travaux divers à l'aide de la flamme produite par la tête de ce chalumeau.

On sait qu'un chalumeau classique à gaz comprend à une extrémité une tête munie d'une buse où se forme la flamme et à l'extrémité opposée des embouts de raccordement à des tuyaux souples d'alimentation en gaz ; ces embouts sont suivis de robinets de réglage du débit de chaque gaz. Entre les robinets et la tête s'étend le corps du chalumeau qui comprend des tubes rigides par lequel les gaz sont conduits à la tête.

Le document GB-A 2 143 762 décrit un bras articulé d'un robot pour la coupe de métaux à l'aide d'un chalumeau oxyacétylènique; ce bras comprend un support général pouvant tourner autour d'un axe vertical, un premier élément de bras articulé sur le support général pour osciller autour d'un axe horizontal, un second élément de bras articulé sur l'extrémité libre du premier élément pour osciller autour d'un axe horizontal, un porte-chalumeau monté à l'extrémité libre du second élément de bras pour osciller autour d'un axe horizontal et autour d'un axe orthogonal à cet axe horizontal.

Ce montage est analogue à celui d'une flèche de grue: l'ensemble du bras peut être plus ou moins dressé ou incliné mais il ne peut pas subir d'extension proprement dite de sorte que le rapport est plutôt faible entre sa portée la plus éloignée et sa portée la plus proche du support général.

En outre, le chalumeau placé à l'extrémité du bras est alimenté en gaz par des tuyaux souples qui s'étendent en totalité à l'extérieur du bras, entre le support général et le chalumeau. Ces tuyaux sont la cause d'une gêne pendant le travail et, aussi, un risque de danger surtout quand le bras est utilisé dans un milieu encombré ou chaud.

L'invention a pour but d'apporter un chalumeau avec lequel les tuyaux souples extérieurs au corps de ce chalumeau sont substantiellement et même totalement éliminés et dont le corps peut en outre être déployé ou allongé et raccourci à volonté dans une mesure qui peut, si désiré, être importante.

Un chalumeau à gaz ayant un corps avec, à une première extrémité, des robinets de raccordement à des sources de fluide et de réglage du débit de ces fluides, à une seconde extrémité une tête de chalumeau, comprenant en plus en relation avec ladite première extrémité un support à partir duquel s'étend le corps jusqu'à ladite tête de chalumeau, ce corps étant articulé sur ce support par un moyen de raccordement à articulation mécanique et à passages de fluide assurant le raccordement de ce corps avec lesdits robinets, comprenant aussi au moins un moyen de manœuvre servant au déplacement à la distance de la tête de chalumeau et étant articulé à une extrémité avec le support, est caractérisé selon l'invention en ce que le corps est constitué par des tronçons de tube rigide articulés et raccordés d'une part entre eux par des moyens de raccordement à articulation mécanique et à passage de fluide, d'autre part aux deux extrémités du corps par des moyens de raccordement respectivement aux robinets et à la tête de chalumeau, ces tronçons de tube assurant eux-mêmes la transmission des gaz entre le support et la tête de chalumeau, cependant que ledit moyen de manœuvre est articulé à son autre extrémité au moins avec les tronçons de tube proches de ce support.

Nombreuses configurations des tronçons de tube rigide articulés entre eux sont possibles.

Selon un aspect de l'invention les tronçons de tube se succèdent les uns après les autres et sont articulés entre eux par leurs extrémités ; des moyens de manoeuvre sont montés entre le support et chacun des tronçons successifs.

Selon un autre aspect de l'invention, les tronçons de tube constituent une série de premières branches se suivant et une série de secondes branches se suivant, assemblées en parallélogrammes déformables et articulées dans leur zone médiane à l'aide d'axes et par leurs extrémités à l'aide de moyens de raccordement à articulation et à passage de fluide dans l'une au moins des séries de branches ; un moyen de guidage et un moyen de déplacement sont associés au support et les tronçons proches du support de l'une au moins des séries de branches sont articulés par un moyen de raccordement à articulation avec un élément mobile déplaçable le long du moyen de guidage sous l'effet du moyen de déplacement cependant que les tronçons proches du support de l'autre série de branches sont articulés avec un élément d'articulation, à position fixe de préférence, par un moyen de raccordement à articulation et à passage de fluide assurant leur raccordement avec les robinets correspondants; les tronçons de tube proches de la tête de chalumeau de la même autre série de branches sont articulés avec celle-ci par un moyen de raccordement à articulation et à passage de gaz assurant leur raccordement avec cette tête.

Chaque moyen de raccordement à articulation et à passage de gaz peut être constitué par un joint tournant associé à de courts tuyaux souples raccordant entre eux pour le passage du fluide les tronçons de tube qui sont réunis par ce joint tournant.

De préférence chaque moyen de raccordement à articulation et à passage de gaz est constitué par un joint tournant à canaux intérieurs assurant la continuité de la circulation et ayant des embouts de raccordement des tronçons de tube qui sont réunis par ce joint tournant; chaque moyen de raccordement de ce genre placé entre les tronçons de tube et les robinets correspondant à ces derniers comprend des tubes rigides ou si on le juge souhaitable de courts tuyaux souples de raccordement entre ces robinets et les embouts desdits joints tournants.

Il est possible, si on le juge utile, que chaque branche se compose de plusieurs tronçons de tube parallèles constituant autant de réseaux distincts d'alimentation d'une ou de plusieurs têtes de chalumeau en plusieurs fluides ou pour conduire un fluide de refroidissement jusqu'au lieu d'action de la ou des têtes de chalumeau. Dans un tel cas les moyens de raccordement à articulation comprennent des tuyaux souples ou des canaux distincts qui assurent respectivement la continuité des réseaux distincts de circulation de gaz.

Selon un mode de réalisation de l'invention, le chalumeau comprend en plus un organe porteur ayant un moyen de guidage et un moyen de déplacement en translation ; le support mentionné plus haut est monté sur cet organe porteur pour être guidé et déplacé par les moyens de guidage et de déplacement.

Selon un mode préféré de réalisation de l'invention, le chalumeau comprend encore une base équipée d'un arbre et l'organe porteur est monté sur cet arbre de manière pivotante autour de l'axe de ce dernier.

Pour bien faire comprendre l'invention, on donnera maintenant une description de deux exemples de réalisation et de plusieurs variantes de détail d'un chalumeau à gaz conforme à l'invention. On se reportera aux dessins annexés dans lesquels :

- la figure 1 est une vue générale d'un chalumeau à gaz conforme à l'invention en cours d'utilisation sur une pièce dessinée en trait fin,
- la figure 2 est une vue de dessus du même chalumeau à gaz représenté en trait plein à une position centrale et en trait mixte à deux positions extrêmes,
- les figures 3 et 4 sont des vues respectivement en élévation et de dessus d'un chalumeau à gaz des figures 1 et 2 utilisé pour un autre type de travail à la flamme,
- la figure 5 est une vue en élévation d'un autre exemple de réalisation d'un chalumeau à gaz conforme à l'invention,
- la figure 6 est une vue partielle d'un chalumeau à gaz selon les figures 1 à 4 montrant seulement le corps articulé et extensible et un moyen de guidage de la tête de ce chalumeau,
- la figure 7 est une vue partielle selon la flèche F de la figure 6,
- la figure 8 est une vue en coupe selon VIII-VIII de la figure 6,
- la figure 9 est une vue en coupe analogue à la figure 8 montrant un mode pratique de réalisation d'un joint tournant à canaux intérieurs,
- la figure 10 est une vue en coupe selon X-X de la figure 9,
- la figure 11 est une vue partielle en perspective montrant une variante de réalisation d'un joint tournant à tuyaux souples,
- la figure 12 est une vue partielle en partie en coupe de la base et de l'organe porteur qui complètent, sur le chalumeau à gaz de la figure 1, le corps articulé extensible de la figure 6.

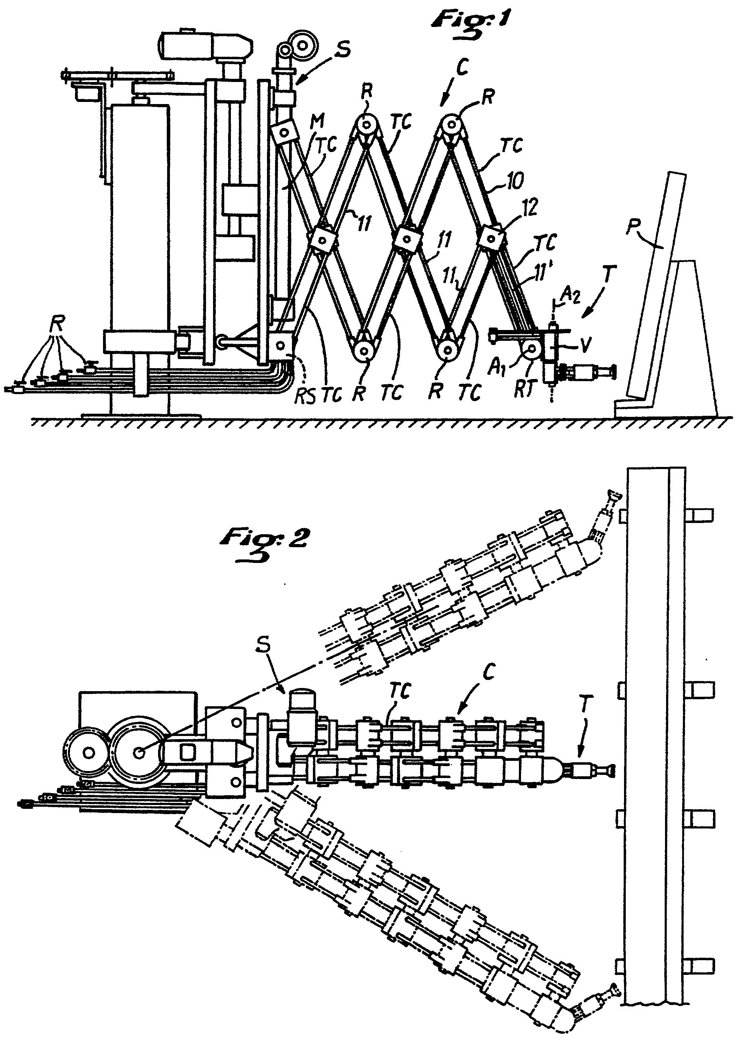

Les figures 1 et 5 montrent qu'un chalumeau à gaz conforme à l'invention comprend à une première extrémité un support S qui porte des robinets RO servant au raccordement du chalumeau à des sources de gaz ou de fluide de natures diverses et au réglage du débit des gaz ou fluide. A une seconde extrémité il existe au moins une tête de chalumeau T qui est équipée de préférence d'une buse interchangeable ainsi qu'il est connu. Entre ces deux extrémités se trouve le corps C du chalumeau qui est constitué par au moins une série de tronçons de tube rigide TC qui sont articulés entre eux et qui sont raccordés successivement entre eux à l'aide de moyens de raccordement R à articulation et à passage de fluide.

Les tronçons de tube rigide TC proches du support S sont articulés sur ce dernier par un moyen de raccordement RS à articulation et à passage de fluide qui assure leur raccordement avec les robinets RO par l'intermédiaire de tubes fixes.

Les tronçons de tubes rigide TC proches de la tête T du chalumeau sont articulés avec cette dernière par un moyen de raccordement RT à articulation et à passage de fluide qui assure leur raccordement avec cette tête T.

Des moyens de manoeuvre M des tronçons successifs articulés TC sont montés entre le support S et les tronçons successifs TC (figure 5) ou entre le support S et les tronçons TC les plus proches de ce dernier et capables de transmettre leur mouvement aux tronçons TC qui les suivent (figure 1).

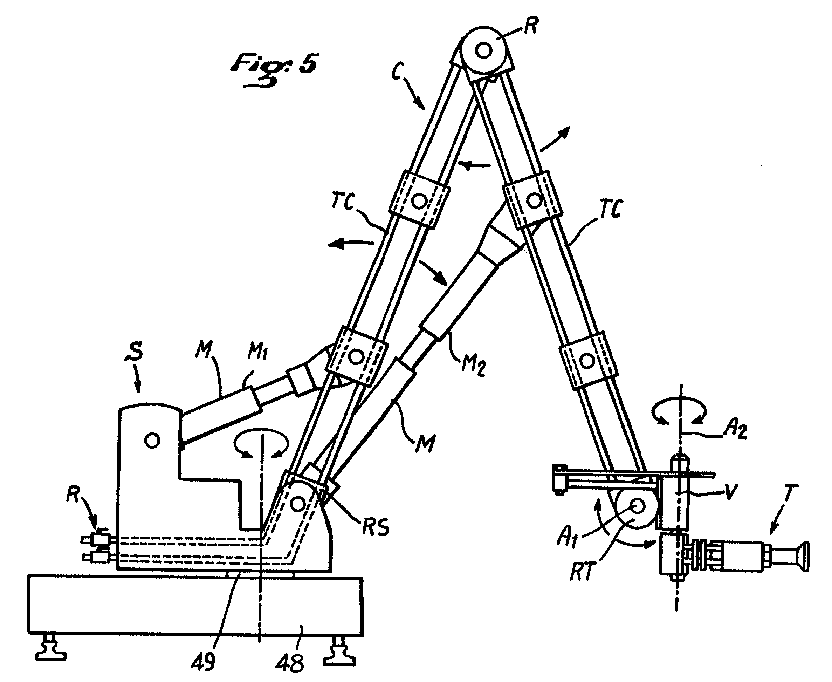

Les figures 1 et 4 montrent que des configurations différentes des tronçons successifs TC articulés peuvent être adaptées dans le cadre de l'invention.

Avec un chalumeau à corps articulé et extensible conformément à la conception de l'invention on peut exécuter des travaux sur une pièce P à l'aide de la flamme produite à la tête T en commandant à distance les mouvements de cette dernière et en réglant à distance les débits des fluides, comme les figures 1 à 4 le montrent bien. On peut donner au corps articulé et extensible des dimensions et une résistance convenables pour pouvoir faire travailler la tête T à une distance considérable des robinets RO, dans un milieu dangereux ou encombré où un homme ne pourrait pas travailler ou ne pourrait travailler que pendant une durée limitée avec un chalumeau à gaz classique à corps rigide.

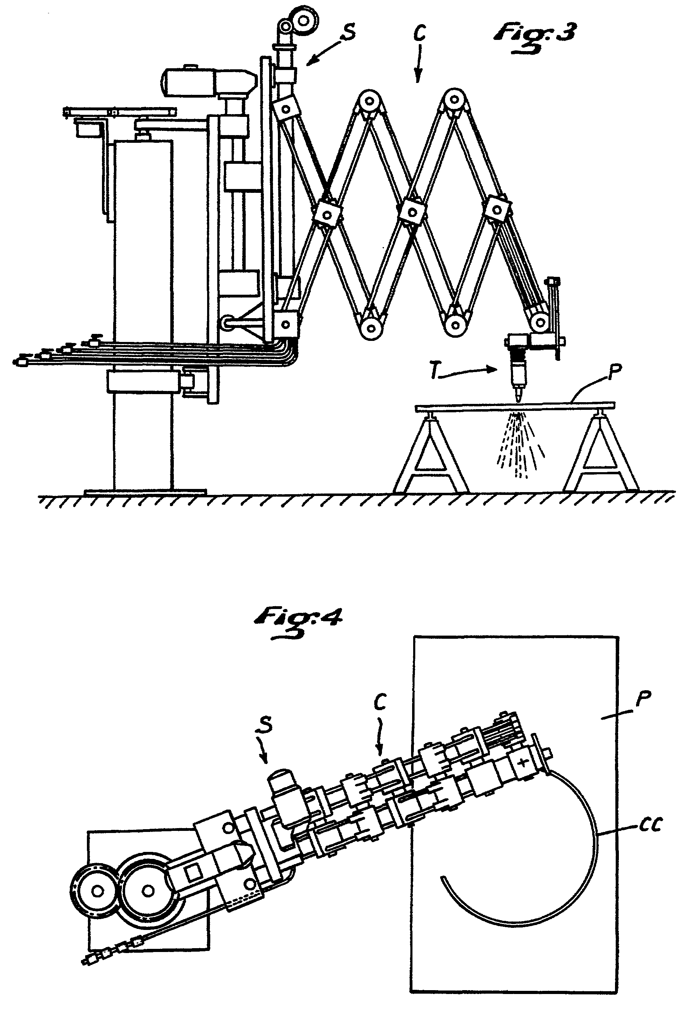

Sur les figures 3 et 4, le chalumeau de l'invention exécute une coupe circulaire CC dans une pièce P grâce à la souplesse du corps articulé commandé par des moyens de manoeuvre que l'on décrira plus loin.

Sur la figure 5, le corps articulé est composé de deux branches qui se suivent et chacune d'elles est reliée au support S par un vérin respectif $M_1$, $M_2$. Ces derniers sont de type classique connu et sont alimentés chacun en fluide sous pression par des moyens classiques (non représentés).

Dans tous les cas, quelle que soit la configuration du corps articulé et extensible C les gaz et/ou les fluides nécessaires à l'exécution du travail sont conduits par le corps lui-même sans emploi de tuyaux souples ou avec l'emploi de tuyaux souples de longueur extrêmement réduite.

On donnera maintenant une description détaillée du mode de réalisation illustré par les figures 1 à 4.

Avec cette configuration du corps articulé et extensible, le chalumeau à gaz de l'invention comprend un support 1 (figure 6) qui peut être fixe ou mobile, un moyen de guidage 2 constitué par deux barres parallèles 3, 4 fixées par une extrémité au support 1 et réunies à leur extrémité opposée par un élément d'articulation 5. Ce moyen de guidage 2 porte un élément mobile tel qu'un coulisseau 6 monté pour coulisser le long des barres parallèles 3,4. Un moyen de déplacement constitué par une vis allongée 7 s'étend entre les barres 3, 4 en traversant un écrou (non représenté) qui fait partie du coulisseau 6. Une extrémité de la vis 7 est guidée dans le support 1 où elle est accouplée en rotation avec un moteur électrique 8 et elle est guidée par son extrémité opposée dans l'élément d'articulation 5.

Avec le coulisseau 6 est articulée par l'intermédiaire d'un axe 9 une extrémité d'une branche 10 tandis que le bloc de liaison 5 sert d'élément d'articulation à position fixe pour l'extrémité d'une autre branche 11. Mais celle-ci est articulée avec l'élément d'articulation 5 par l'intermédiaire d'un joint tournant d'extrémité 12.

Les branches 10, 11 font partie du corps articulé et extensible C du chalumeau. L'ensemble des branches 10, 11 est désigné ici par la référence générale 13 et s'étend à partir du support 1. Cet ensemble de branches 13 est composé de nombreuses branches analogues aux branches 10,11, qui sont assemblées en losange et articulées. Les deux branches 10,11 se croisent en leur partie médiane où elles sont articulées autour d'un axe 14. On peut distinguer une série de premières branches 10 articulées qui se suivent et une série de secondes branches 11 articulées qui se suivent. Les branches qui se suivent sont articulées entre elles par des moyens de raccordement à articulation et à passage de fluide constitués par des joints tournants d'articulation 12. Le nombre des branches qui se suivent de cette façon n'est pas limité par l'invention. L'ensemble des branches 13 se termine par deux branches dont l'une 10 est interrompue à mi-longueur après son articulation à l'aide de l'axe 14 avec l'autre branche 11. Celle-ci est pourvue à son extrémité libre d'un joint tournant d'extrémité 12 par l'intermédiaire duquel elle est réunie à la tête 15 du chalumeau.

Les branches 10 et 11 sont constituées chacune par un ou plusieurs tronçons ou longueurs déterminées de tube que l'on appellera par simplification des tubes. Quatre tubes sont disposés en deux paires parallèles qui passent de part et d'autre de chaque axe d'articulation 14. Ce dernier traverse des plaques de montage 16 qui tiennent ensemble les quatre tubes de chaque branche 10 ou 11.

On se reportera maintenant à la figure 8 pour décrire un exemple de réalisation d'un joint tournant d'articulation 12. Ce dernier comprend un arbre central 16 qui a dans un plan transversal médian un collet annulaire 17. De part et d'autre de ce dernier sont montés libres en rotation à l'aide de roulements à billes 18,19 deux manchons 20A, 20B respectivement. Le montage de chaque manchon sur l'arbre central 16 est rendu étanche aux fluides au moyen de plusieurs joints toriques 21 logés dans des rainures convenables. Dans la face intérieure des manchons 20A, 20B sont creusées des gorges annulaires 22, de préférence entre deux rainures contenant des joints toriques 21. A chaque gorge annulaire 22 correspond dans chaque manchon un canal 23 intérieur à ce manchon et chaque canal 23 aboutit sur la face latérale longitudinale du manchon à un embout de raccordement 24, extérieur, qui s'étend en sens radial en dehors du manchon. Les embouts 24 sont mieux visibles sur la figure 1 ; cette figure 1 montre aussi que les tubes 10,11 sont réunis par leurs extrémités opposées à deux embouts de raccordement 24. En outre, à l'intérieur de l'arbre central 16 sont percés des canaux longitudinaux 25 qui s'étendent de part et d'autre du collet annulaire 17 et dont les extrémités opposées sont réunies chacune respectivement par un canal radial 26 à une gorge annulaire 22 de l'un et de l'autre manchon 20A, 20B. Ainsi est réalisée la continuité à travers les joints d'articulation 12 du passage entre les tubes qui sont reliés par ces joints. La figure 3 se rapporte à un exemple dans lequel chaque branche 10 est composée de quatre tubes qui sont disposés par paires dans deux plans parallèles perpendiculaires à l'arbre central 16 et qui aboutissent au manchon 20A ; les branches 11 se composent donc de quatre tubes qui sont aussi disposés par paires dans deux plans parallèles perpendiculaires à l'arbre central 16.

L'invention ne limite pas le nombre des tubes qui composent les branches 10,11 articulées. Dans le cas le plus simple chaque branche 10,11 pourrait ne comprendre qu'un seul tube ; il n'existerait alors qu'une seule gorge annulaire 22 dans chacun des manchons 20A,20B et qu'un seul canal longitudinal 25 dans l'arbre central 16. L'adaptation des joints tournants d'articulation 12 à des nombres différents de tubes ne comporte pas de difficulté à partir des explications données ci-dessus.

Quand il existe quatre tubes dans une branche, ces tubes peuvent servir à alimenter la tête 15 du chalumeau en quatre fluides à l'aide de quatre circuits : un circuit de gaz combustible (acétylène ou propane), un circuit d'oxygène à faible débit, un circuit d'oxygène à fort débit, un circuit d'eau de refroidissement.

Quand une succession de branches comme les premières branches 10 sur la figure 6 n'est pas utilisée pour l'alimentation en fluide de la tête ou même de plusieurs têtes 15 , les tubes peuvent être remplacés par des tiges pleines mais sans avantage particulier et avec l'inconvénient d'un poids plus élevé.

Quand le coulisseau 6 est déplacé par la vis 7, les branches articulées se resserrent les unes contre les autres ou s'éloignent les unes des autres dans une direction, ainsi qu'il est bien connu, selon le sens du déplacement du coulisseau 6, et la longueur de l'ensemble 13 est modifiée de manière continue. On peut donc commander à distance le déplacement de la tête 15 du chalumeau.

Selon une variante de réalisation, l'élément d'articulation 5 pourrait être monté coulissant sur les barres parallèles 3, 4 et être traversé par la vis 7 pour s'engager avec elle, cette vis ayant ainsi qu'il est connu en soi deux filets à pas opposés pour imposer à l'élément d'articulation 5 des mouvements conjugués à ceux du coulisseau 6, de sens opposés.

Les joints tournants d'extrémité 12 servent à relier les tubes du corps du chalumeau d'une part à des sources de fluide à l'extrémité de l'ensemble 13 des branches proche du support 1, d'autre part à la tête 15 du chalumeau à l'extrémité de l'ensemble 13 éloignée du support 1.

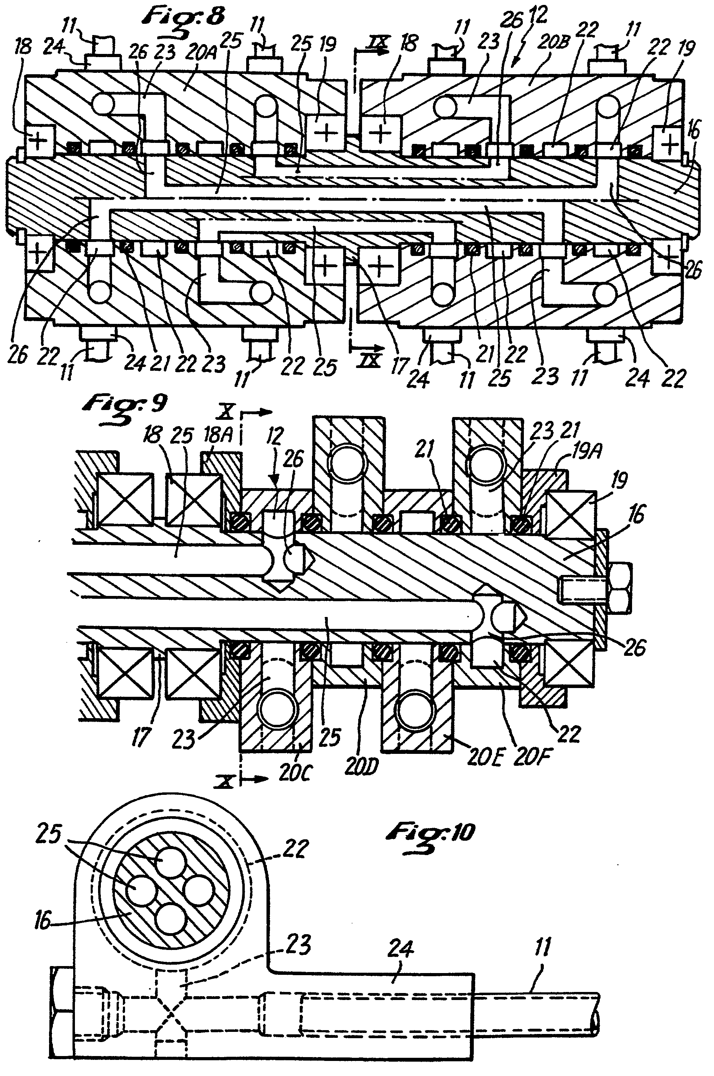

L'exemple préféré de réalisation d'un joint tournant d'articulation 12 illustré par les figures 9 et 10 est similaire à celui de la figure 8. Pour cette raison les pièces identiques ont été désignées par les mêmes références numériques. La différence principale par rapport à la réalisation représentée sur la figure 8 est que les manchons 20A, 20B de cette dernière figure sont remplacés par un assemblage de plaques individuelles 20C, 20D, 20E, 20F dont le nombre est égal de part et d'autre du collet annulaire 17 au nombre de tubes qui composent chaque branche 10, 11. Ces plaques 20C à 20F sont empilées sur l'arbre central 16 et immobilisées en translation axiale sur ce dernier de part et d'autre du collet annulaire 17. Au total, à chaque joint tournant 12 le nombre des plaques est donc le double des tubes qui composent chaque branche. La figure 9 ne montre que la moitié du joint tournant 12 située à droite du collet 17 quand on regarde cette figure ; l'autre moitié est symétrique par rapport à ce collet 17. Les rainures prévues pour les joints toriques d'étanchéité 21 sont ménagées en partie dans les deux faces planes latérales opposées des plaques 20C à 20D de façon à constituer des rainures complètes contenant chacune un joint 21 quand ces plaques sont accolées par leurs faces planes latérales. Des rondelles extrêmes 18A et 19A sont associées aux roulements à billes 18, 19 pour contenir entre elles les plaques 20C à 20D et elles ont aussi des demi-rainures complémentaires pour contenir des joints d'étanchéité.

Chaque plaque 20C à 20F a une configuration visible sur la figure 10, en grande partie cylindrique avec un embout de raccordement 24 qui lui est incorporé de manière tangentielle dans l'ênsemble. A l'intérieur de chaque plaque 20C à 20F est creusée une gorge annulaire 22 qui est reliée par un canal intérieur 23 au passage intérieur de l'embout 24. Dans ce dernier est fixée par exemple par vissage la partie extrême d'un tube d'une branche 10 ou 11.

L'arbre central 16 est identique à celui de la figure 8 avec des canaux radiaux 26 qui relient la gorge annulaire 22 de chaque plaque 20C à 20F respectivement à un canal longitudinal 25. Deux canaux longitudinaux 25 seulement sont représentés sur la figure 9 pour la clarte du dessin.

L'avantage apporté par cet exemple de réalisation est que les plaques 20C à 20F sont identiques et permettent de réaliser des branches 10,11 dont le nombre de tubes est quelconque ; seule la longueur de l'arbre central est différente selon le nombre de plaques empilées sur lui dans le sens de sa longueur. L'un des roulements à billes, 18, s'appuie contre le collet central 17 et l'autre roulement 19 est arrêté en sens axial par des moyens connus. Avec un tel montage les tubes des branches 10,11 ne sont plus groupés par paires dans un même plan perpendiculaire à l'arbre central 16 puisqu'un seul tube correspond à chaque plaque 20C à 20F comme le montre la figure 9.

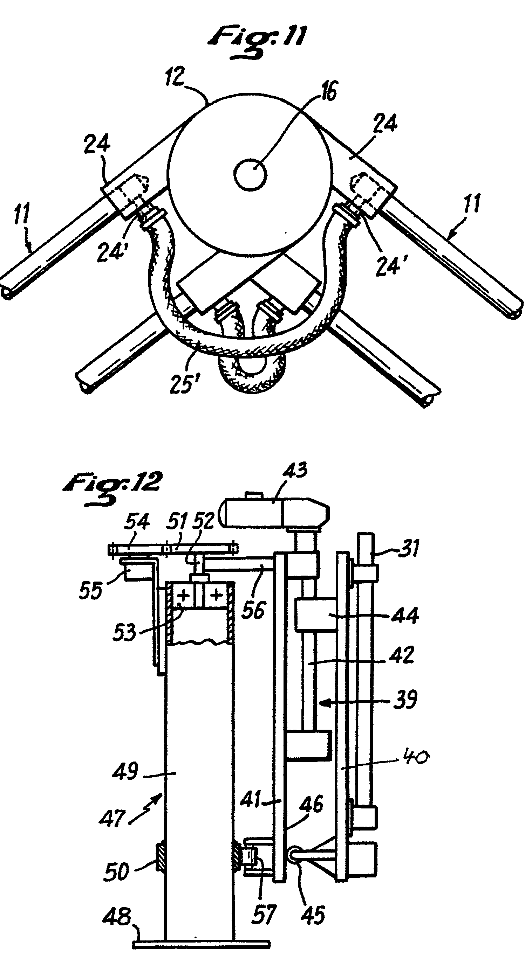

La figure 11 se rapporte à une variante de réalisation d'un moyen de raccordement à articulation et à passage de fluide. Dans cette variante l'arbre central 16 existe comme décrit plus haut pour assurer l'articulation mécanique des branches 11 mais aucun canal n'est creusé dans cet arbre central 16. Chaque embout 24 qui sert au montage d'un tube faisant partie d'une branche 11 a un embout latéral secondaire 24' qui communique intérieurement avec le logement dans lequel est fixée l'extrémité du tube des branches 10,11. La continuité de la circulation du fluide entre deux tubes 11 qui se suivent est assurée par un court tuyau souple 25' qui réunit deux embouts latéraux secondaires 24' et qui joue extérieurement le même rôle que les canaux intérieurs 25, 26 sur les figures 8 et 9. Sur la figure 11, un seul tuyau souple 25' est représenté pour la clarté de la figure.

Cette variante est utilisable aussi pour les raccords d'extrémité pour le raccordement aux robinets RO et à la tête T du chalumeau. Elle n'est pas préférée parce qu' elle comporte des tuyaux souples, bien que ceux-ci soient de très faible longueur chacun. On notera que le moyen de raccordement à articulation et à passage de fluide dans un tuyau souple extérieur convient avec un corps C de chalumeau ayant une configuration quelconque.

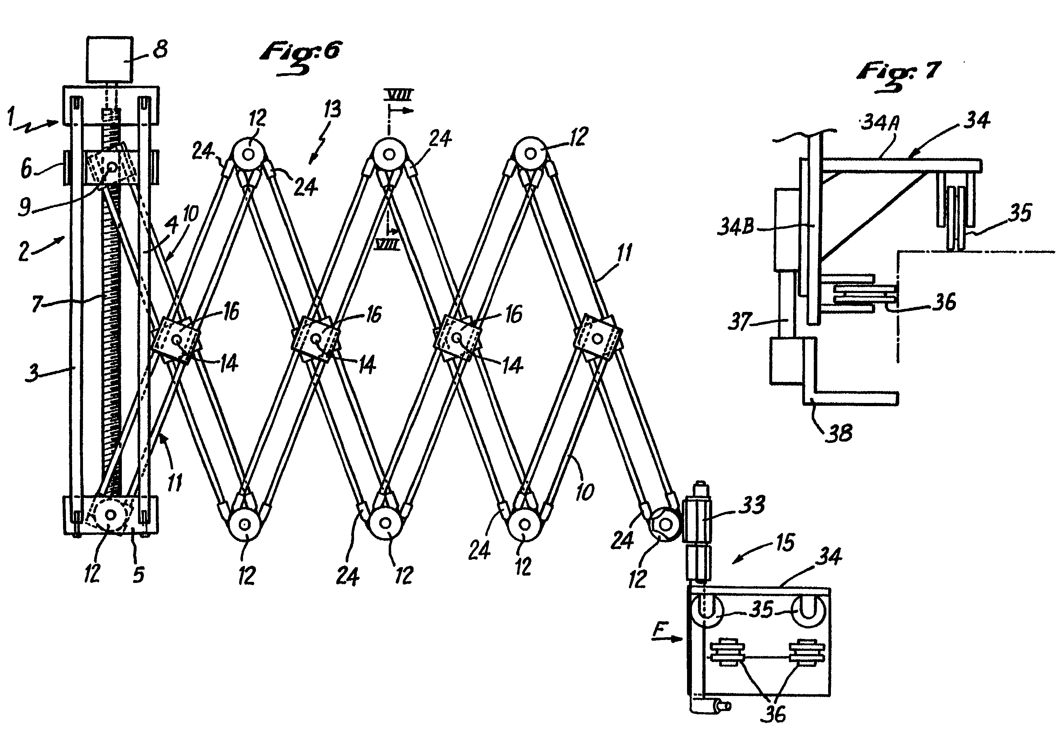

La tête 15 qui équipe l'extrémité éloignée d'une branche 11 peut être d'un type quelconque approprié au travail à exécuter à la flamme. Les figures 1 et 6 ne montrent qu'un exemple particulier de tête de chalumeau. Sur la figure 6 il existe à la tête 15 du chalumeau un arbre 33 auquel est fixée une équerre 34 à deux ailes 34A, 34B dont la face intérieure des deux ailes est équipée d'une paire de deux galets espacés 35,36 respectivement. Ces galets 35, 36 sont prévus pour rouler sur deux faces adjacentes d'une pièce (représentée partiellement en trait mixte sur la figure 7 seulement). A la face extérieure d'une aile 34B est attachée une tige 37 ; une extrémité de cette dernière s'étend au-delà de l'équerre 34 et elle est pourvue d'un support 38 de la tête proprement dite qui est raccordée aux branches 11 par l'intermédiaire du joint tournant d'extrémité 12.

On se reportera maintenant à la figure 12 pour décrire la partie du chalumeau des figures 1 à 4 qui complète la partie illustrée par la figure 6. Sur la figure 12 les robinets RO et les tubes qui aboutissent au joint tournant d'extrémité proche du support S n'ont pas été représentés pour plus de clarté du dessin.

Sur cette figure 12, une enveloppe 31 abrite le support 1 et elle est attachée à un organe porteur 39. Ce dernier comprend une première plaque 40 à laquelle est fixée l'enveloppe 31 et une seconde plaque 41 parallèle à la première plaque 40. Cette seconde plaque 41 porte une vis 42 accouplée en rotation avec un moteur 43 ; cette vis 42 est engagée avec un écrou 44 fixé à la première plaque 40 ; en outre celle-ci est munie sur sa face tournée vers la seconde plaque 41 d'au moins un galet 45 qui roule sur une plage 46 de cette seconde plaque 41. Cette plage 46 sert de moyen de guidage en translation de l'enveloppe 31 quand agit le moyen de déplacement constitué par la vis 42 et l'écrou 44. Ainsi le support 1 et le chalumeau sont déplacés parallèlement à la dimension longitudinale de ce support 1.

L'organe porteur 39 est monté sur une base 47 qui comprend un socle 48 sur lequel est fixé par une extrémité un cylindre creux 49. Ce dernier est parallèle au support 1 et il porte une plage circulaire 50 à l'une de ses parties extrêmes ; son extrémité opposée est équipée d'une roue dentée 51 calée en rotation sur un arbre 52. Ce dernier est monté libre en rotation dans le cylindre creux 49 au moyen d'un roulement à billes 53, coaxialement à la plage circulaire 50. Cet arbre 52 est saillant en dehors du cylindre creux 49 pour porter la roue dentée 51. Celle-ci engrène avec un pignon 54 qui est monté sur l'arbre d'un moteur 55 supporté sur le côté du cylindre creux 49. La partie saillante de l'arbre 52 est réunie solidement par un bras 56 à une extrémité de la seconde plaque 41 dont l'autre extrémité est pourvue d'un galet 57 qui est tenu appliqué contre la plage circulaire 50. Cet appui du galet 57 résulte de l'effet de la gravité quand le cylindre creux 49 est placé verticalement avec la roue dentée 51 à son sommet.

Avec un chalumeau conforme à l'invention, la tête que porte le corps articulé et extensible peut être déplacée dans le sens de l'extension et de la rétraction de ce corps comme on l'a expliqué plus haut, dans le sens des mouvements rectilignes alternatifs de l'écrou 44 le long de la vis 42, et dans le sens des mouvements circulaires du galet 57 autour du cylindre creux 49 sous l'effet du moteur 55, comme illustré par les figures 2 et 4.

Il existe entre les figures 1, 3 et 6 une différence intentionnelle de détail relative au nombre des branches 10,11 du corps articulé. Sur la figure 6 il existe quatre tronçons successifs de tube dans les branches 11 entre le support 1 et la tête T de sorte que ces branches aboutissent directement à la tête T. Sur les figures 1 et 3 il n'existe que deux tronçons et demi de tube dans les branches 11. De ce fait à partir du croisement articulé des branches 10,11 proche de la tête T des demi-longueurs de tube 11' s'étendent jusqu'à la tête T pour l'alimentation de celle-ci. Dans ce cas, les branches sont articulées par un moyen de raccordement à articulation et à passage de fluide analogue à un joint tournant 12 pour assurer la continuité de la circulation entre les branches 11 et 11'.

Sur les figures 1 à 5, la tête T du chalumeau est montée orientable autour de deux axes orthogonaux $A_1$,$A_2$ à l'aide de deux vérins rotatifs V (dont l'un seulement est visible) alimentés en fluide sous pression à travers les branches du corps articulé C.

Selon une variante la tête T pourrait être fixée à l'extrémité de l'une des branches 10, 11, sans moyen de raccordement articulé et sans moyen de manoeuvre de cette tête. Mais la capacité d'un tel chalumeau serait très limitée dans son utilisation.

Il est clair que d'autres moyens de manipulation connus en soi peuvent être employés pour porter et déplacer le support 1 qui fait partie du chalumeau. Par exemple sur la figure 5, le support S comprend seulement un socle 48 et un cylindre 49 de pivotement autour de l'axe géométrique de ce dernier.

Le chalumeau de l'invention permet, principalement quand il s'agit d'un chalumeau d'oxycoupage, de travailler à distance dans des endroits exigus et dans des milieux défavorables aux personnes et aux tuyaux souples, parce que l'alimentation en fluide de la tête se fait par la structure même du bras extensible, sans tuyau souple ou avec des longueurs très réduites de tuyaux souples.

Comme exemples d'utilisation du dispositif de l'invention on peut citer diverses opérations qui sont à exécuter sur les brames de métal chaud produites en coulée continue ou toutes opérations nécessitant un chalumeau et qui doivent être exécutées dans un milieu dangereux.

## Revendications

1. Chalumeau à gaz ayant un corps (C) avec, à une première extrémité, des robinets (RO) de raccordement à des sources de fluide et de réglage du débit de ces fluides à une seconde extrémité une tête de chalumeau (T), comprenant en plus en relation avec ladite première extrémité un support (S) à partir duquel s'étend le corps (C) jusqu'à ladite tête de chalumeau (T), ce corps (C) étant articulé sur ce support (S) par un moyen de raccordement (RS) à articulation mécanique et à passages de fluide assurant le raccordement de ce corps (C) avec lesdits robinets (RO), comprenant aussi au moins un moyen de manœuvre (M) servant au déplacement à distance de la tête de chalumeau (T) et étant articulé à une extrémité avec le support (S), caractérisé en ce que le corps (C) est constitué par des tronçons de tube rigide (TC) articulés et raccordés d'une part entre eux par des moyens de raccordement (R) à articulation mécanique et à passage de fluide, d'autre part aux deux extrémités du corps (C) par des moyens de raccordement (RS, RT) respectivement aux robinets (RO) et à la tête de chalumeau (T), ces tronçons de tube assurant eux-mêmes la transmission des gaz entre le support (S) et la tête de chalumeau (T), cependant que ledit moyen de manœuvre (M) est articulé à son autre extrémité au moins avec les tronçons de tube (TC) proches de ce support (S).

2. Chalumeau selon la revendication 1, caractérisé en ce que les tronçons de tube (TC) se succèdent les uns après les autres et sont articulés entre eux par leurs extrémités, des moyens de manœuvre ($M_1$, $M_2$) étant articulés par leurs extrémités opposées d'une part sur le support (S), d'autre part respectivement sur les tronçons de tube (TC) successifs.

3. Chalumeau selon la revendication 1, caractérisé en ce que les tronçons de tube constituent une série de premières branches (10) se suivant et une série de secondes branches (11) se suivant, assemblées en parallélogrammes déformables et articulées entre elles dans leur zone médiane à l'aide d'axes (14), et par une de leurs extrémités avec le support (S) à l'aide de moyens de raccordement (R) à articulation et à passage de gaz dans l'une au moins desdites séries de branches, ce support (S) comprenant un moyen de guidage (3) et un moyen de déplacement (7) associés respectivement aux tronçons de tube (TC) proches de ce support (S) de l'une au moins des séries de branches (10, 11), celles-ci étant articulées par un moyen de raccordement à articulation (9) avec un élément mobile (6) déplaçable le long du moyen de guidage (3) sous l'effet du moyen de déplacement (7) cependant que les branches de l'autre série de branches (10, 11) sont articulées avec un élément d'articulation (5) et de passage de gaz, de préférence à position fixe, du support (S), permettant leur raccordement avec les robinets (RO).

4. Chalumeau selon l'une quelconque des revendications 2, 3, caractérisé en ce que la tête (T) est réunie au moyen de raccordement (RT) par l'intermédiaire de deux vérins (V) à axe orthogonaux alimentés en fluide sous pression à travers les tronçons de tube (TC) du corps (C).

5. Chalumeau à gaz selon l'une quelconque des revendications 1 et 3, caractérisé en ce que le corps (C) est terminé à son extrémité éloignée du support (S) par deux branches articulées l'une avec l'autre par un joint tournant (12), l'une de ces branches, constituée par au moins un tube (11, 11') s'étend au-delà de ce joint tournant (12) et elle est articulée à son extrémité avec la tête (T, 15) par l'intermédiaire d'un joint tournant d'extrémité (RT).

6. Dispositif selon l'une quelconque des revendications 1 à 5, caractérisé en ce que les moyens de raccordement (R) sont des joints tournants (12) interposés sur les branches (10, 11) et ils comprennent chacun un arbre central (16) sur lequel sont montés libres en rotation deux manchons (20A, 20B) ayant des gorges annulaires intérieures (22) en nombre égal à celui des tubes composant une branche (10, 11), les gorges (22) de chaque manchon étant réunies par des canaux intérieurs (23) à ces embouts (24) de raccordement desdits tubes et les gorges (22) des deux manchons étant reliées respectivement entre elles par des canaux longitudinaux (25) intérieurs audit arbre central (16).

7. Dispositif selon l'une quelconque des revendications 1 à 5, caractérisé en ce que les moyens de raccordement (R) sont des joints tournants (12) interposés sur les branches (10, 11) et ils comprennent chacun un arbre central (16) sur lequel sont montées libres en rotation des plaques (20C à 20F) en nombre double de celui des tubes composant une branche (10, 11), chaque plaque (20C à 20F) ayant une gorge annulaire intérieure (22) et un embout (24) de raccordement d'un tube avec un canal intérieur (23) les réunissant, les gorges (22) d'une moitié des plaques étant reliées par des canaux longitudinaux (25) intérieurs dudit arbre central (16) aux gorges (22) correspondantes de l'autre moitié des mêmes plaques.

8. Chalumeau selon l'une quelconque des revendications 1 à 7 caractérisé en ce que le support (1) est monté sur un cylindre (49) pour pouvoir tourner autour de l'axe géométrique de ce dernier, ce cylindre étant supporté par un socle (48), et un moteur (55) est relié cinématiquement au support (1) pour le déplacer autour du cylindre (49).

9. Chalumeau selon la revendication 8, caractérisé en ce que le support (1) est monté sur le cylindre (49) par l'intermédiaire d'un organe porteur (39) et ce support (1) est monté déplaçable en translation sur l'organe porteur (39) dans des sens parallèles au cylindre (49).

## Patentansprüche

1. Löt- bzw. Schweißgasbrenner mit einem Körper (C), der an einem ersten Ende Hähne (RO) zum Anschluß an Fluidquellen und zur Einstellung der Abgabe dieser Fluide aufweist, und an einem zweiten Ende einen Brennerkopf (T), sowie in Verbindung mit dem genannten ersten Ende einen Support (S), von welchem sich der Körper (C) bis zum Brennerkopf (T) erstreckt, der Körper (C) an dem Support (S) mittels einer ein mechanisches Gelenk aufweisenden Verbindungseinrichtung (RS) gelenkig verbunden ist und diese Fluidströmungswege aufweist, die den Anschluß des Körpers (C) an die genannten Hähne (RO) gewährleisten, und mit mindestens einer Betätigungsvorrichtung (M), die zur Fernverstellung des Brennerkopfes (T) dient, und die an einem Ende mit dem Support (S) gelenkig verbunden ist, dadurch gekennzeichnet, daß der Körper (C) aus starren, gelenkig verbundenen Rohrabschnitten (TC) besteht, die einerseits zwischen sich mittels Verbindungseinrichtungen (R) mit mechanischem Gelenk und mit einem Fluidströmungsweg verbunden sind, und die andererseits an den beiden Enden des Körpers (C) mittels Verbindungseinrichtungen (RS, RT) jeweils mit den Hähnen (RO) und mit dem Brennerkopf (t) verbunden sind, und die Rohrabschnitte selbst den Durchgang des Gases zwischen dem Support (S) und dem Brennerkopf (T) gewährleisten, während die Betätigungsvorrichtung (M) an ihrem anderen Ende mit dem nahe am Support (S) liegenden Rohrabschnitten (TC) gelenkig verbunden ist.

2. Löt- bzw. Schweißgasbrenner nach Anspruch 1, dadurch gekennzeichnet, daß die Rohrabschnitte (TC) aufeinanderfolgen und miteinander mittels ihrer Enden gelenkig verbunden sind, daß die Betätigungsvorrichtungen (M1, M2) mittels ihrer entgegengesetzten Enden einerseits mit dem Support (S) und andererseits jeweils mit den aufeinander folgenden Rohrabschnitten (TC) gelenkig verbunden sind.

3. Löt- bzw. Schweißgasbrenner nach Anspruch 1, dadurch gekennzeichnet, daß die Rohrabschnitte eine Reihe erster aufeinanderfolgender Zweige (10) bilden, sowie eine Reihe zweiter, sich folgender Zweige (11), die als verformbare Parallelogramme zusammengesetzt sind und zwischen sich in ihrer mittleren Zone mit Hilfe von Bolzen (14) gelenkig verbunden sind, und die über eine ihrer Enden mit dem Support (S) mittels Verbindungseinrichtungen (R) mit einem Gelenk und einem Gasströmungsweg in mindestens einer der Reihe der Zweige gelenkig verbunden sind, der Support (S) eine Führungsvorrichtung (3) und eine Verschiebevorrichtung (7) aufweist, die jeweils den Rohrabschnitten (TC) zugeordnet ist, die aus mindestens einer der Reihe der Zweige (10, 11) nahe am Support (S) liegen, und diese mittels einer Verbindungseinrichtung gelenkig verbunden sind, die eine Gelenkverbindung (g) mit einem beweglichen Element (6) aufweist, die längs der Führungsvorrichtung (3) unter dem Einfluß der Verschiebevorrichtung (7) verschiebbar ist, während die Zweige der anderen Reihe der Zweige (10, 11) mit einem Element (5) zur Gelenkverbindung und zum Gasdurchtritt des Supports (S), das sich vorzugsweise in festgelegter Stellung befindet, gelenkig verbunden sind, was ihren Anschluß an die Hähne (RO) gestattet.

4. Löt- bzw. Schweißgasbrenner nach einem der Ansprüche 2, 3, dadurch gekennzeichnet, daß der Brennerkopf (T) mit der Verbindungseinrichtung (RT) und der Zwischenschaltung zweier Hubzylinder (V) mit rechtwinklig zueinander liegender Achse verbunden ist, die über die Rohrabschnitte (TC) des Körpers (C) mit einem Druckfluid gespeist werden.

5. Löt- bzw. Schweißgasbrenner nach einem der Ansprüche 1 und 3, dadurch gekennzeichnet, daß der Körper (C) an seinem vom Support (S) fernen Ende durch zwei Zweige abgeschlossen ist, die miteinander über eine Drehverbindung (12) gelenkig verbunden sind, daß einer dieser Zweige, der aus mindestens einem Rohr (11, 11') besteht, sich über die Drehverbindung (12) hinaus erstreckt und an seinem Ende mit dem Brennerkopf (T, 15) über die Zwischenschaltung einer endseitigen Drehverbindung (RT) gelenkig verbunden ist.

6. Dichtung nach einem der Ansprüche 1 bis 5, dadurch gekennzeichnet, daß die Verbindungseinrichtungen (R) Drehverbindungen (12) sind, die auf den Zweigen (10, 11) zwischengeschaltet sind und die jeweils einen mittigen Bolzen (16) umfassen, auf dem frei drehbar zwei Muffen (20A, 20B) montiert sind, die innere ringförmige Auskehlungen (22) aufweisen, deren Anzahl gleich jener der Rohre eines Zweiges (10, 11) ist, die Auskehlungen (22) einer jeden Muffe über innere Kanäle (23) mit den Einfassungen (24) jeder Muffe für den Anschluß der genannten Rohre verbunden ist und die Auskehlungen (22) der beiden Muffen jeweils zwischen sich durch in Längsrichtung verlaufende innere Kanäle (25) des zentralen Bolzens (16) verbunden werden.

7. Vorrichtung nach einem der Ansprüche 1 bis 5, dadurch gekennzeichnet, daß die Verbindungseinrichtungen (R) Drehverbindungen (12) sind, die zwischen den Zweigen (10, 11) zwischengeschaltet sind und daß sie jeweils einen zentralen Bolzen (16) umfassen, auf welchem frei drehbar Platten (20C bis 20F) montiert sind, deren Anzahl das zweifache der Anzahl der einen Zweig (10, 11) bildenden Rohre ist, jede Platte (20C bis 20F) eine ringförmige innere Auskehlung (22) hat und eine Einfassung (24) für den Anschluß eines Rohres mit einem diese verbindenden inneren Kanal (23), und die Auskehlungen (22) einer Hälfte der Platten über in Längsrichtung verlaufende innere Kanäle (25) des mittigen Bolzens mit zugeordneten Auskehlungen (22) der anderen Hälfte der Platten verbunden sind.

8. Löt- bzw. Schweißgasbrenner nach einem der Ansprüche 1 bis 7, dadurch gekennzeichnet, daß der Support (1) auf einem Zylinder (49) befestigt ist, damit er sich um die geometrische Achse desselben drehen kann, daß der Zylinder von einem Sockel (48) gehalten wird, und daß ein Motor (55) kinematisch mit dem Support (1) verbunden ist, um diesen um den Zylinder (49) verschieben.

9. Löt- bzw. Schweißgasbrenner nach Anspruch 8, dadurch gekennzeichnet, daß der Support (1) auf dem Zylinder (49) und der Zwischenschaltung eines Trägerelements (39) befestigt ist und daß der Support (1) für eine Translationsbewegung auf dem Trägerelement (39) in Richtungen parallel zum Zylinder (49) montiert ist.

**Claims**

1. A gas torch having a body (C) with, at a first end, taps (RO) for connection to sources of fluid and for controlling the flow rate of said fluids, at a second end a torch head (T), further comprising in relation to said first end a support (S) from which the body (C) extends to said torch head (T), said body (C) king pivotally mounted to the support (S) by a connecting means (RS) with a mechanical pivot action and with fluid passages providing the connection of said body (C) to said taps (RO), also comprising at least one operatig means (M) serving for remote displacement of the torch head (T) and being pivotally mounted at one end to the support (S), characterised in that the body (C) is formed by rigid tube portions (TC) which are pivoted and connected on the one hand to each other by connecting means (R) with a mechanical pivot action and with a fluid passage and on the other hand at the two ends of the body (C) by connecting means (RS, RT) respectively to the taps (RO) and to the torch head (T), said tube portions themselves providing for transmission of the gases between the support (S) and the torch head (T) while said operating means (M) is pivotally connected at its other end at least to the tube portions (TC) which are close to said support (S).

2. A torch according to claim 1 characterised in that the tube portions (TC) are disposed in mutual succession and are pivotally connected together by way of their ends, operating means ($M_1$, $M_2$) being pivotally connected by way of their opposite ends on the one end to the support (S) and on the other hand to the successive tube portions (TC) respectively.

3. A torch according to claim 1 characterised in that the tube portions constitute a series of successive first limbs (10) and a series of successive second limbs (11) which are assembled to provide deformable parallelograms pivotally connected to each other in their central zone by means of axes (14) and by way of one of their ends to the support (S) by way of connecting means (R) with a pivot action and with a gas passage in one at least of said series of limbs, said support (S) comprising a guide means (3) and a displacement means (7) respectively associated with the tube portions (TC) close to said support (S) of one at least of the series of limbs (10, 11), the latter being pivotally connected by a pivotal connecting means (9) to a movable element (6) which is displaceable along the guide means (3) under the effect of the displacement means (7) while the limbs of the other series of limbs (10, 11) are pivotally connected to a pivot and gas-passage elements (5), which is preferably fixed in position, of the support (S), permitting connection thereof to the taps (RO).

4. A torch according to either one of claims 2 and 3 characterised in that the head (T) is connected to the connecting means (RT) by way of two jacks (V) with orthogonal axes, which are supplied with fluid under pressure by way of the tube portions (TC) of the body (C).

5. A gas torch according to either one of claims 1 and 3 characterised in that the body (C) is terminated at its end remote from the support (S) by two limbs which are pivotally connected to each other by a rotary joint (12), one of said limbs which is formed by at least one tube (11, 11') extends beyond the rotary joint (12) and it is pivotally connected at its end to the head (T, 15) by way of an end rotary joint (RT).

6. An apparatus according to any one of claims 1 to 5 characterised in that the connecting means (R) are rotary joints (12) which are interposed on the limbs (10, 11) and they each comprise a central shaft (16) on which two sleeves (20A, 20B) are freely rotatably mounted, the two sleeves having internal annular grooves (22), with the number of said grooves being equal to the number of tubes making up a limb (10, 11), the grooves (22) in each slow being connected by internal ducts (23) to connecting end portions (24) of said tubes and the grooves (22) of the two sleeves big respectively connected to each other by longitudinal ducts (25) which are internal to said central shaft (16).

7. Apparatus according to any one of claims 1 to 5 characterised in that the connecting means (R) are rotary joints (12) which are interposed on the limbs (10, 11) and they each comprise a central shaft (16) on which plates (20C to 20F) are freely rotatably mounted, the number of plates being double the number of tubes making up a limb (10, 11), each plate (20C to 20F) having an internal annular groove (22) and an end portion (24) for connection of a tube with an internal duct (23) connecting them, the grooves (22) of one half of the plates king connected by internal longitudinal ducts (25) in said central shift (16) to the corresponding grooves (22) of the other half of the same plates.

8. A torch according to any one of claims 1 to 7 characterised in that the support (1) is mounted on a cylinder (49) to be capable of turning about the geometrical axis of the latter, the cylinder being supported by a base (48), and a motor (55) is kinematically connected to the support (1) for displacing it around the cylinder (49).

9. A torch according to claim 8 characterised in that the support (1) is mounted on the cylinder (49) by way of a carrier member (39) and said support (1) is mounted displaceably with a translatory movement on the carrier member (39) in directions parallel to the cylinder (49).

EP 0 275 737 B1

*Fig.1*

*Fig.2*

EP 0 275 737 B1

*Fig:3*

*Fig:4*

Fig. 5

*Fig.6*

*Fig.7*

EP 0 275 737 B1

*Fig. 8*

*Fig. 9*

*Fig. 10*

Fig.11

Fig.12